# EUROPEAN PATENT APPLICATION

(11) **EP 4 779 745 A1**
(43) Date of publication of application: **22.07.2026**
(21) Application number: 24883828.6
(22) Date of filing: 30.04.2024
(51) Int. Cl.: H01M 10/058

(54) **ELECTRODE ASSEMBLY AND ADHESIVE TAPE APPLICATION METHOD THEREFOR, BATTERY CELL, BATTERY, AND ELECTRIC DEVICE**

(30) Priority: 01.11.2023 CN 202311443462
(71) Applicant: Contemporary Amperex Technology Co., Limited, Ningde, Fujian 352100 (CN)
(72) Inventor: XIANG, Hao, Ningde, Fujian 352100 (CN); QU, Fei, Ningde, Fujian 352100 (CN)
(74) Representative: Lorenz Seidler Gossel Part. mbB
(86) International application number: PCT/CN2024/090924
(87) International publication number: WO 2025/091814

(57) **Abstract**

The present application is applicable to the technical field of power batteries, and provides an electrode assembly (400) and an adhesive tape application method therefor, a battery cell (300), a battery (200), and an electric device (100). The electrode assembly comprises: a first covering member (60) provided on the surface of the electrode assembly, the first covering member being provided with an information pattern; and a second covering member (70) provided on the surface of the electrode assembly, the information pattern being exposed outside the second covering member. According to the present application, the second covering member covers the surface of the electrode assembly, so that the electrode assembly is protected by the second covering member, thus reducing the impact of the external environment on the electrode assembly; and when the second covering member covers the electrode assembly, the information pattern can be exposed outside the second covering member, thus reducing the impact of the second covering member on the first covering member, so that an identification device can identify information recorded on the first covering member.

## Description

### BATTERY, AND ELECTRIC DEVICE

The present application claims priority to the Chinese Patent Application No. 202311443462.6, filed with the China National Intellectual Property Administration on November 1, 2023 and entitled "ELECTRODE ASSEMBLY AND ADHESIVE TAPE APPLICATION METHOD THEREFOR, BATTERY CELL, BATTERY, AND ELECTRIC DEVICE", which is incorporated herein by reference in its entirety.

### TECHNICAL FIELD

The present application relates to the technical field of power batteries, and particularly relates to an electrode assembly and an adhesive tape application method therefor, a battery cell, a battery, and an electric device.

### BACKGROUND

Energy saving and emission reduction are key to the sustainable development of the automotive industry, and electric vehicles have become an important part of the sustainable development of the automotive industry due to their advantages in energy saving and environmental protection. For electric vehicles, battery technology is a critical factor related to their development.

In the production process of electrode assembly, it is generally necessary to attach protective adhesive tape and quick response code adhesive tape on the electrode assembly, where the protective adhesive tape is used to reduce damage to the electrode sheets or separators of the electrode assembly during the production and transportation process, and the quick response code adhesive tape records product information; in the production process of electrode assembly, it is difficult to recognize the quick response code adhesive tape.

### SUMMARY

In view of the above problems, the present application provides an electrode assembly and an adhesive tape application method therefor, a battery cell, a battery, and an electric device, which solves the problem that the quick response code adhesive tape tends to be difficult to recognize during the production process of electrode assembly.

According to a first aspect, some embodiments of the present application provide an electrode assembly, including:
an electrode assembly;
a first covering member disposed on a surface of the electrode assembly, where an information pattern is provided on the first covering member; and
a second covering member disposed on a surface of the electrode assembly, where the information pattern is exposed outside the second covering member.

In the technical solution of these embodiments, the second covering member covers the surface of the electrode assembly to protect the electrode assembly through the second covering member and reduce the impact of the external environment on the electrode assembly. When the second covering member covers the electrode assembly, the information pattern is enabled to be exposed outside the second covering member, thereby reducing the influence of the second covering member on the first covering member, thereby facilitating the recognition devices in recognizing the information recorded on the first covering member.

In some embodiments, the second covering member is spaced apart from the first covering member.

In the technical solution of these embodiments, the second covering member is spaced apart from the first covering member to reduce the impact of the second covering member on the first covering member, such that the first covering member can be better exposed to the external environment, thereby facilitating the recognition devices in recognizing the information recorded on the first covering member.

In some embodiments, the second covering member is provided with an avoidance hole, and the first covering member is received in the avoidance hole.

In the technical solution of these embodiments, the avoidance hole is provided on the second covering member, such that when the second covering member is disposed on the first surface, the first covering member can be located in the avoidance hole, and the second covering member can cover a larger area of the first surface and reduce the area of the first surface exposed to the external environment, thereby improving the protection effect of the second covering member on the electrode assembly.

In some embodiments, the avoidance hole includes at least two avoidance sidewalls, and two adjacent avoidance sidewalls are connected by a rounded corner.

In the technical solution of these embodiments, the two adjacent avoidance sidewalls of the avoidance hole are connected by the rounded corner. Compared with the direct connection of two avoidance sidewalls that forms a sharp corner, the provision of the rounded corner can reduce stress concentration at the junction of the two avoidance sidewalls. Since the second covering member usually needs to be tensioned after being disposed on the first surface to reduce wrinkling, the provision of the rounded corner can reduce stress concentration, thereby reducing the risk of the second covering member being torn during the tensioning process.

In some embodiments, a distance between a sidewall of the first covering member and an adjacent avoidance sidewall is greater than zero.

In the technical solution of these embodiments, the distance between the sidewall of the first covering member and the avoidance sidewall is greater than zero, so as to facilitate the reception of the first covering member in the avoidance hole, reduce the difficulty of the first covering member being received in the avoidance hole when the second covering member is disposed on the first surface, and also reduce the risk of the information pattern being shielded by the second covering member, providing a margin of error for the process of disposing the second covering member on the first surface in the processing steps.

In some embodiments, the distance between the sidewall of the first covering member and the adjacent one of the avoidance sidewalls is less than or equal to 1 mm.

The technical solution of these embodiments provides a range of distances between the sidewall of the first covering member and the avoidance sidewall to reduce the difficulty of the first covering member being received in the avoidance hole when the second covering member is disposed on the first surface, reduce the risk of the first covering member being shielded by the second covering member, and also reduce the exposed area of the first surface in the gap between the sidewall of the first covering member and the avoidance sidewall, such that the second covering member can better perform the function of protecting the electrode assembly.

In some embodiments, the electrode assembly includes two oppositely disposed first surfaces, and the first covering member and the second covering member are disposed on the same first surface; or
the surface includes a first surface surrounding the electrode assembly.

In the technical solution of these embodiments, the electrode assembly can be formed by a lamination process or a winding process. To be specific, the adhesive tape application method for an electrode assembly may be applied to various types of electrode assemblies, which improves the compatibility of the adhesive tape application method for an electrode assembly.

In some embodiments, a distance between any edge of a projection of the second covering member on the first surface and an edge of an adjacent one of the first surfaces is greater than zero.

In the technical solution of these embodiments, the distance between the edge of the projection of the second covering member on the first surface and the edge of the adjacent first surface is greater than zero, that is, a gap is provided between any side of the second covering member and the edge of the adjacent first surface, such that no side of the second covering member is likely to extend beyond the first surface, thereby reducing the risk of the second covering member adhering to debris.

In some embodiments, the distance between the edge of the projection of the second covering member on the first surface and the edge of the adjacent one of the first surfaces is less than or equal to 3 mm.

The technical solution of these embodiments provides a range of distances between the edge of the projection of the second covering member on the first surface and the edge of the adjacent first surface, such that the second covering member is less likely to extend beyond the first surface, and also allows the second covering member to cover a larger area of the first surface, thereby better performing the function of protecting the electrode assembly.

According to a second aspect, some embodiments of the present application further provide an adhesive tape application method for an electrode assembly, including:
disposing a first covering member on a surface of the electrode assembly, where an information pattern is provided on the first covering member; and
disposing a second covering member on the surface, where the information pattern is exposed outside the second covering member.

In the technical solution of these embodiments, the information pattern is provided on the first covering member to facilitate a recognition device in recognizing the information recorded in the information pattern, and the first covering member is first disposed on the surface of the electrode assembly to meet the processing step requirements; and the second covering member covers the surface of the electrode assembly to protect the electrode assembly through the second covering member and reduce the impact of the external environment on the electrode assembly. When the second covering member covers the electrode assembly, the information pattern is enabled to be exposed outside the second covering member, so as to facilitate the recognition devices in subsequent steps to recognize the information recorded on the first covering member.

In some embodiments, in the step of disposing a second covering member on the surface, the second covering member is spaced apart from the first covering member.

In the technical solution of these embodiments, the second covering member is spaced apart from the first covering member to reduce the impact of the second covering member on the first covering member, such that the first covering member can be better exposed to the external environment, thereby facilitating the recognition devices in recognizing the information recorded on the first covering member.

In some embodiments, before the step of disposing a second covering member on the surface, the adhesive tape application method for an electrode assembly further includes:
providing the second covering member and providing an avoidance hole on the second covering member; where
in the step of disposing a second covering member on the surface, the first covering member is located in the avoidance hole.

In the technical solution of these embodiments, the avoidance hole is provided on the second covering member, such that when the second covering member is disposed on the first surface, the first covering member can be located in the avoidance hole, and the second covering member can cover a larger area of the first surface and reduce the area of the first surface exposed to the external environment, thereby improving the protection effect of the second covering member on the electrode assembly.

In some embodiments, the avoidance hole includes at least two avoidance sidewalls, and two adjacent avoidance sidewalls are connected by a rounded corner.

In the technical solution of these embodiments, the two adjacent avoidance sidewalls of the avoidance hole are connected by the rounded corner. Compared with the direct connection of two avoidance sidewalls that forms a sharp corner, the provision of the rounded corner can reduce stress concentration at the junction of the two avoidance sidewalls. Since the second covering member usually needs to be tensioned after being disposed on the first surface to reduce wrinkling, the provision of the rounded corner can reduce stress concentration, thereby reducing the risk of the second covering member being torn during the tensioning process.

In some embodiments, a distance between a sidewall of the first covering member and an adjacent avoidance sidewall is greater than zero.

In the technical solution of these embodiments, the distance between the sidewall of the first covering member and the avoidance sidewall is greater than zero, so as to facilitate the reception of the first covering member in the avoidance hole, reduce the difficulty of the first covering member being received in the avoidance hole when the second covering member is disposed on the first surface, and also reduce the risk of the first covering member being shielded by the second covering member, providing a margin of error for the process of disposing the second covering member on the first surface in the processing steps.

In some embodiments, the distance between the sidewall of the first covering member and the adjacent one of the avoidance sidewalls is less than or equal to 1 mm.

The technical solution of these embodiments provides a range of distances between the sidewall of the first covering member and the avoidance sidewall, to reduce the difficulty of the first covering member being received in the avoidance hole when the second covering member is disposed on the first surface, reduce the risk of the first covering member being shielded by the second covering member, and also reduce the exposed area of the first surface in the gap between the sidewall of the first covering member and the avoidance sidewall, such that the second covering member can better perform the function of protecting the electrode assembly.

In some embodiments, the surface includes two oppositely disposed first surfaces, and the first covering member and the second covering member are disposed on the same first surface; or
the surface includes a first surface surrounding the electrode assembly.

In the technical solution of these embodiments, the surface of the electrode assembly may include two oppositely disposed first surfaces, in which case the electrode assembly may be formed by a lamination process or a winding process, and the second covering member can protect a certain first surface of the electrode assembly; or the surface of the electrode assembly may alternatively include a first surface surrounding the electrode assembly, in which case the electrode assembly is formed by winding. To be specific, the adhesive tape application method for an electrode assembly may be applied to various types of electrode assemblies, which improves the compatibility of the adhesive tape application method for an electrode assembly.

In some embodiments, in the step of disposing a second covering member on the surface, a projection area of the second covering member on the first surface is smaller than an area of the first surface.

In the technical solution of these embodiments, the projection area of the second covering member on the first surface is smaller than the projection area of the first surface, such that the second covering member cannot completely cover the first surface, thus preventing the second covering member from extending to the first surface. As the second covering member that extends beyond the first surface may adhere to external impurities (such as dust and metal debris), which likely adversely affect the yield of the electrode assembly. This configuration can reduce the risk of the second covering member adhering to debris.

In some embodiments, a distance between any edge of a projection of the second covering member on the first surface and an edge of an adjacent one of the first surfaces is greater than zero.

In the technical solution of these embodiments, the distance between the edge of the projection of the second covering member on the first surface and the edge of the adjacent first surface is greater than zero, that is, a gap is provided between any side of the second covering member and the edge of the adjacent first surface, such that no side of the second covering member is likely to extend beyond the first surface, thereby reducing the risk of the second covering member adhering to debris.

In some embodiments, the distance between the edge of the projection of the second covering member on the first surface and the edge of the adjacent one of the first surfaces is less than or equal to 3 mm.

The technical solution of these embodiments provides a range of distances between the edge of the projection of the second covering member on the first surface and the edge of the adjacent first surface, such that the second covering member is less likely to extend beyond the first surface, and also allows the second covering member to cover a larger area of the first surface, thereby better performing the function of protecting the electrode assembly.

In some embodiments, the surface includes two oppositely disposed first surfaces, and the first covering member is disposed on any one of the two first surfaces; and
the adhesive tape application method for an electrode assembly further includes:
disposing a third covering member on the first surface, where the third covering member and the first covering member are respectively disposed on different ones of the first surfaces.

In the technical solution of these embodiments, the third covering member is provided and disposed on the first surface opposite the first covering member, such that the third covering member can protect the corresponding first surface. Since one first covering member is required on the electrode assembly for the recognition devices to obtain information, the first surface corresponding to the third covering member need not be provided with the first covering member, and in this case, the third covering member involves no issues of avoidance and information covering.

In some embodiments, a distance between any edge of a projection of the third covering member on the first surface and an edge of an adjacent one of the first surfaces is greater than zero.

Similar to the second covering member, the third covering member is also prone to adhere to debris if it extends beyond the first surface. Accordingly, in the technical solution of these embodiments, the distance between the edge of the projection of the third covering member on the first surface and the edge of the adjacent first surface is greater than zero, that is, a gap is provided between any side of the third covering member and the edge of the adjacent first surface, such that no side of the third covering member is likely to extend beyond the first surface, thereby reducing the risk of the third covering member adhering to debris.

In some embodiments, the distance between the edge of the projection of the third covering member on the first surface and the edge of the adjacent one of the first surfaces is less than or equal to 3 mm.

The technical solution of these embodiments provides a range of distances between the edge of the projection of the third covering member on the first surface and the edge of the adjacent first surface, such that the third covering member is less likely to extend beyond the first surface, and also allows the third covering member to cover a larger area of the first surface, thereby better performing the function of protecting the electrode assembly.

In some embodiments, before the step of disposing a first covering member on a surface of the electrode assembly, the adhesive tape application method for an electrode assembly further includes:
performing pre-pressing and shaping treatments on the electrode assembly.

In the technical solution of these embodiments, before the step of disposing a first covering member on a surface of the electrode assembly, a step of performing pre-pressing and shaping treatments on the electrode assembly is further provided, so as to facilitate the first covering member to be attached to the electrode assembly.

In some embodiments, the adhesive tape application method for an electrode assembly further includes:
disposing a fourth covering member on two opposite second surfaces of the electrode assembly, where an area of the second surface is smaller than an area of the first surface, and the second surface is adjacent to the first surface.

In the technical solution of these embodiments, the fourth covering member is provided to protect the two opposite second surfaces of the electrode assembly, so as to work in conjunction with the second covering member to better protect the electrode assembly; meanwhile, the area of the second surface is smaller than the area of the first surface, to be specific, the first covering member is disposed on the surface of the electrode assembly with a larger area, so as to reduce the difficulty of fixing the first covering member and also facilitate a recognition device in recognizing the information recorded on the first covering member.

According to a third aspect, some embodiments of the present application further provide a battery cell, including the electrode assembly formed by the adhesive tape application method for a battery assembly provided in some embodiments of the first aspect; or the electrode assembly provided in some embodiments of the second aspect.

According to a fourth aspect, some embodiments of the present application further provide a battery, including the battery cell provided in some embodiments of the third aspect.

According to a fifth aspect, some embodiments of the present application further provide an electric device, including the battery provided in some embodiments of the fourth aspect.

The above description is merely an overview of the technical solutions of the present application. In order to more clearly understand the technical means of the present application and to implement them in accordance with the contents of the specification, and in order to make the above and other objects, features, and advantages of the present application more obvious and easy to understand, the specific implementation manners of the present application are specifically illustrated below.

### BRIEF DESCRIPTION OF DRAWINGS

By reading the detailed description of the preferred embodiments below, various other advantages and benefits will become clear to those of ordinary skill in the art. The accompanying drawings are only for the purpose of illustrating the preferred embodiments and are not considered as limitations to the present application. Moreover, identical parts are denoted by identical reference numerals in all the drawings. In the drawings:
FIG. 1 is a schematic structural diagram of an electric device provided in some embodiments of the present application;
FIG. 2 is a schematic exploded structural diagram of a battery provided in some embodiments of the present application;
FIG. 3 is a schematic exploded structural diagram of a battery cell provided in some embodiments of the present application;
FIG. 4 is a schematic front view of an electrode assembly provided in some embodiments of the present application;
FIG. 5 is a schematic rear view of an electrode assembly provided in some embodiments of the present application;
FIG. 6 is a schematic flowchart of an adhesive tape application method for an electrode assembly provided in some embodiments of the present application;
FIG. 7 is a schematic flowchart of an adhesive tape application method for an electrode assembly provided in some other embodiments of the present application;
FIG. 8 is a schematic flowchart of an adhesive tape application method for an electrode assembly provided in still some other embodiments of the present application; and
FIG. 9 is a schematic flowchart of an adhesive tape application method for an electrode assembly provided in yet some other embodiments of the present application.

The meanings of the marks in the drawings are:
100. electric device;
10. motor;
20. controller;
200. battery;
30. case; 31. first portion; 32. second portion;
300. battery cell;
41. casing; 42. end cap;
400. electrode assembly;
51. first surface; 52. second surface;
60. first covering member;
70. second covering member; 71. avoidance hole; 711. avoidance sidewall; 712. rounded corner; and
80. third covering member.

### DESCRIPTION OF EMBODIMENTS

The embodiments of the technical solutions of the present application will be described in detail below with reference to the accompanying drawings. The following embodiments are only used to illustrate the technical solutions of the present application more clearly, and thus are only exemplary and cannot be used to limit the protection scope of the present application.

Unless otherwise defined, all technical and scientific terms used herein have the same meaning as commonly understood by one of ordinary skill in the art to which the present application belongs; the terms used herein are only for the purpose of describing specific embodiments and are not intended to limit the present application; and the terms "including" and "having" and any variations thereof in the specification and claims of the present application and the above description of the drawings are intended to cover non-exclusive inclusions.

In the description of the embodiments of the present application, the technical terms "first", "second", and the like are only used to distinguish different objects and should not be understood as indicating or implying relative importance or implicitly indicating the number, specific order, or primary and secondary relationship of the indicated technical features. In the description of the embodiments of the present application, the meaning of "plurality" is two or more, unless otherwise specifically defined.

As used herein, "embodiment" means that a particular feature, structure, or characteristic described in connection with the embodiment can be included in at least one embodiment of the present application. The phrase appearing in various places in the specification does not necessarily refer to the same embodiment, nor is it an independent or alternative embodiment that is mutually exclusive from other embodiments. Those of ordinary skill in the art explicitly and implicitly understand that the embodiments described herein can be combined with other embodiments.

In the description of the embodiments of the present application, the term "and/or" is merely an association describing associated objects, indicating that three relationships can exist, for example, A and/or B can indicate: A exists alone, A and B exist simultaneously, B exists alone. In addition, the character "/" in this document generally indicates that the preceding and following associated objects are in an "or" relationship.

In the description of the embodiments of the present application, the term "plurality" refers to two or more (including two), similarly, "plurality of groups" refers to two or more groups (including two groups), and "plurality of sheets" refers to two or more sheets (including two sheets).

In the description of the embodiments of the present application, the orientation or positional relationship indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like is based on the orientation or positional relationship shown in the drawings, which is only for facilitating the description of the embodiments of the present application and simplifying the description, and does not indicate or imply that the referred device or element must have a specific orientation, be constructed and operated in a specific orientation, and therefore cannot be understood as a limitation to the embodiments of the present application.

In the description of the embodiments of the present application, unless otherwise expressly specified and defined, the technical terms "mounting", "connection", "joining", "fixing", and the like should be understood in a broad sense, for example, it may be a fixed connection, a detachable connection, or integrated; it may also be a mechanical connection or an electrical connection; it may be directly connected or indirectly connected via an intermediary, and it may be the internal communication or interaction relationship between two elements. For those of ordinary skill in the art, the specific meanings of the above terms in the embodiments of the present application can be understood according to specific circumstances.

At present, with the development of the market, the application of power batteries is becoming increasingly widespread. Power batteries are not only applied to energy storage power systems such as hydropower, thermal power, wind power and solar power stations, but also widely applied to electric bicycles, electric motorcycles, electric vehicles and other electric vehicles, as well as military equipment and aerospace and other fields. With the continuous expansion of the application fields of power batteries, their market demand is also rising steadily.

In the production process of electrode assembly, it is usually necessary to attach small adhesive tapes with product information (such as quick response code adhesive tapes and barcode adhesive tapes) on the electrode assembly, so as to facilitate subsequent production equipment in obtaining product parameter information; at the same time, it is also necessary to attach protective adhesive tapes on the electrode assembly to reduce damage to the electrode sheets or separators of the electrode assembly during the production and transportation process.

According to the processing steps of electrode assembly, after the electrode assembly is formed, the small adhesive tape needs to be attached first, so as to facilitate relevant equipment in subsequent cold pressing, inspection, and other steps in obtaining product information. The pasting of the protective adhesive tape usually needs to be performed after steps such as cold pressing, because the electrode assembly usually has internal gaps after formation, resulting in an overall loose structure. If the protective adhesive tape is directly attached, it is likely to cause wrinkling in the adhesive tape, and it will also adversely affect shaping, cold pressing and other steps, and easily cause defects such as wrinkling in the overall electrode assembly.

Because the main function of the small adhesive tape is to record product information, the area of the small adhesive tape is usually small, and it may be attached first without adversely affecting subsequent steps of the electrode assembly.

Accordingly, according to the process requirements, the small adhesive tape is attached to the electrode assembly before the protective adhesive tape, which leads to the protective adhesive tape covering the small adhesive tape after the protective adhesive tape is attached, and adversely affects the recognition of product information by subsequent processing equipment.

To facilitate subsequent equipment in recognizing the product information recorded on the small adhesive tape after the protective adhesive tape is attached, the small adhesive tape can be attached after the protective adhesive tape is attached. However, this will cause the equipment in various steps (cold pressing, inspection, and other steps) between the formation of the electrode assembly and the pasting of the protective adhesive tape to be unable to directly recognize the product information via the small adhesive tape, but can only obtain the product information in other methods, which is likely to cause problems such as cumbersome operation process and reduced production efficiency.

Based on the above considerations, in order to solve the problem that the recognition devices are less likely to recognize the quick response code adhesive tape after the protective adhesive tape is attached, and also to reduce the adverse impacts on production efficiency, the embodiments of the present application provide an adhesive tape application method for an electrode assembly, in which a first covering member with an information pattern is provided to facilitate the recognition devices in various steps in obtaining product information, and a second covering member is also provided to protect the electrode assembly. After the second covering member is disposed on the electrode assembly, the information pattern is enabled to be exposed outside the second covering member, to reduce the shielding or covering of the information pattern by the second covering member.

Because the information pattern can be exposed outside the second covering member, in such an adhesive tape application method for an electrode assembly, the first covering member can be attached first after the electrode assembly is formed, the second covering member can be attached after steps such as cold pressing of the electrode assembly, and the information pattern of the first covering member is exposed, such that under the condition that the second covering member has no obvious wrinkling, the adverse impacts of the second covering member covering the first covering member and the like are reduced or avoided, facilitating the recognition devices in subsequent various steps in obtaining product information.

The adhesive tape application method for an electrode assembly disclosed in the embodiments of the present application is used for producing electrode assemblies. The electrode assembly may serve as an electrochemical reaction component of a battery cell, and the battery cell may be used for electric devices using batteries as power sources or various energy storage systems using batteries as energy storage elements. The electric device may be, but is not limited to, mobile phones, tablets, notebook computers, electric toys, electric tools, electric bicycles, electric vehicles, ships, and spacecraft. The electric toys may include fixed or mobile electric toys, such as game consoles, electric vehicle toys, electric ship toys, and electric aircraft toys, and the spacecraft may include airplanes, rockets, space shuttles, spaceships, and the like.

The following embodiments are described by taking an electric device 100 in one embodiment of the present application as a vehicle as an example for convenience of explanation.

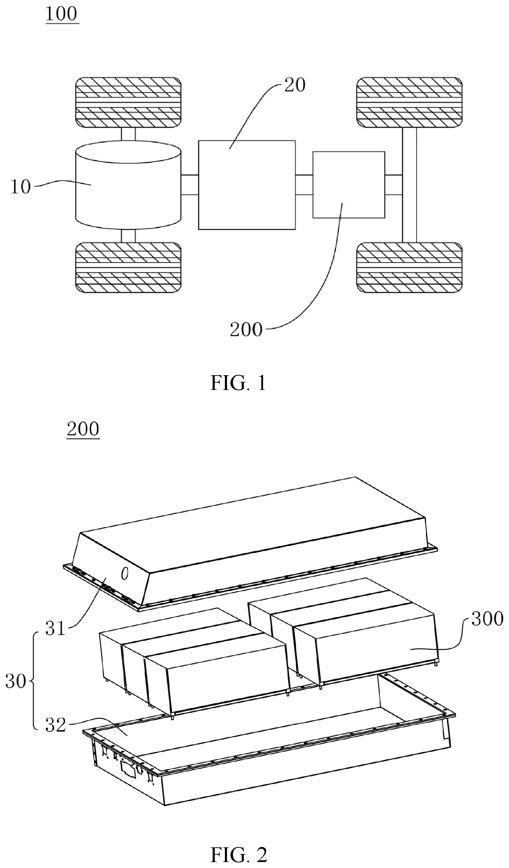

Referring to FIG. 1, FIG. 1 is a schematic structural diagram of an electric device 100 provided in some embodiments of the present application when it is a vehicle. The vehicle may be a fuel vehicle, a gas vehicle, or a new energy vehicle, and the new energy vehicle may be a battery electric vehicle, a hybrid electric vehicle, a range-extended electric vehicle, or the like. A battery 200 is provided inside the vehicle, and the battery 200 may be provided at the bottom, head, or tail of the vehicle. The battery 200 may be used for power supply of the vehicle, for example, the battery 200 may serve as an operating power source of the vehicle. The vehicle may further include a controller 20 and a motor 10, where the controller 20 is configured to control the battery 200 to supply power to the motor 10, for example, for starting, navigation, and working power needs of the vehicle during driving.

In some embodiments of the present application, the battery 200 can not only serve as an operating power source of the vehicle, but also as a driving power source of the vehicle, to replace or partially replace fuel or natural gas and provide driving power for the vehicle.

Referring to FIG. 2, FIG. 2 is a schematic exploded structural diagram of a battery 200 provided in some embodiments of the present application. The battery 200 includes a case 30 and a battery cell 300, where the battery cell 300 is accommodated in the case 30. The case 30 is configured to provide an accommodation space for the battery cell 300, and the case 30 may have various structures. In some embodiments, the case 30 may include a first portion 31 and a second portion 32, where the first portion 31 and the second portion 32 mate with each other, and the first portion 31 and the second portion 32 jointly define an accommodation space for accommodating the battery cell 300. The second portion 32 may be a hollow structure with one end open, the first portion 31 may be a plate-shaped structure, and the first portion 31 covers the open side of the second portion 32, such that the first portion 31 and the second portion 32 jointly define the accommodation space; or the first portion 31 and the second portion 32 may also both be hollow structures with one side open, and the open side of the first portion 31 covers the open side of the second portion 32. Of course, the case 30 formed by the first portion 31 and the second portion 32 may have various shapes, such as a cylinder or a rectangular parallelepiped.

In the battery 200, the battery cell 300 may be provided in multiple, and multiple battery cells 300 may be connected in series, in parallel, or in series-parallel, where the series-parallel connection means that there are both series and parallel connections in the multiple battery cells 300. Multiple battery cells 300 may be directly connected in series, in parallel, or in series-parallel, and then the whole formed by the multiple battery cells 300 is accommodated in the case 30; certainly, the battery 200 may alternatively first connect multiple battery cells 300 in series, in parallel, or in series-parallel to form a battery module, and then multiple battery modules are connected in series, in parallel, or in series-parallel to form a whole and accommodated in the case 30. The battery 200 may further include other structures, for example, the battery 200 may further include a bus member for achieving electrical connection between multiple battery cells 300.

Each battery cell 300 may be a secondary battery or a primary battery; it may alternatively be a lithium-sulfur battery, a sodium-ion battery or a magnesium-ion battery, but is not limited thereto. The battery cell 300 may have a cylindrical shape, a flat shape, a rectangular parallelepiped shape, or other shapes.

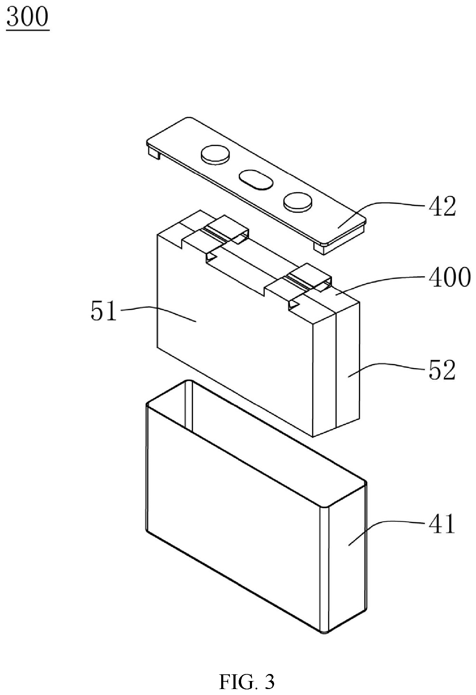

Referring to FIG. 3, FIG. 3 is a schematic exploded structural diagram of a battery cell 300 provided in some embodiments of the present application. The battery cell 300 refers to the smallest unit constituting the battery 200. As shown in the figure, the battery cell 300 includes an end cap 42, a casing 41, an electrode assembly 400, and other functional components.

The end cap 42 refers to a component that covers the opening of the casing 41 to isolate the internal environment of the battery cell 300 from the external environment. Without limitation, the shape of the end cap 42 may be adapted to the shape of the casing 41 to cooperate with the casing 41. Optionally, the end cap 42 may be made of a material with a certain hardness and strength (such as aluminum alloy), such that the end cap 42 is less likely to deform when subjected to extrusion or impact, enabling the battery cell 300 to have higher structural strength and also improving safety performance. Functional components such as electrode terminals may be provided on the end cap 42. The electrode terminal may be electrically connected to the electrode assembly 400 for outputting or inputting electrical energy of the battery cell 300. In some embodiments, a pressure relief mechanism may further be provided on the end cap 42 for releasing internal pressure when the internal pressure or temperature of the battery cell 300 reaches a threshold. The material of the end cap 42 may alternatively be multiple, such as copper, iron, aluminum, stainless steel, aluminum alloy, or plastic, and the embodiments of the present application do not specifically limit this. In some embodiments, an insulating member may further be provided on the inner side of the end cap 42, and the insulating member may be used to isolate electrical connection components in the casing 41 from the end cap 42 to reduce the risk of short circuit. Exemplarily, the insulating member may be plastic, rubber, or the like.

The casing 41 is a component used to cooperate with the end cap 42 to form the internal environment of the battery cell 300, where the formed internal environment may be used to accommodate the electrode assembly 400, electrolyte, and other components. The casing 41 and the end cap 42 may be separate components, an opening may be provided on the casing 41, and the end cap 42 covers the opening to form the internal environment of the battery cell 300. Without limitation, the end cap 42 and the casing 41 may alternatively be integrated. Specifically, the end cap 42 and the casing 41 may first form a common connection surface before other components are inserted into the casing, and when it is necessary to seal the interior of the casing 41, the end cap 42 covers the casing 41. The casing 41 may be in multiple shapes and multiple sizes, such as rectangular parallelepiped, cylindrical, or hexagonal prism. Specifically, the shape of the casing 41 may be determined according to the specific shape and size of the electrode assembly 400. The material of the casing 41 may be multiple, such as copper, iron, aluminum, stainless steel, aluminum alloy, or plastic, and the embodiments of the present application do not specifically limit this.

The electrode assembly 400 is a component in the battery cell 300 where electrochemical reactions occur. The casing 41 may contain one or more electrode assemblies 400. The electrode assembly 400 is mainly formed by winding or stacking a positive electrode sheet and a negative electrode sheet, and a separator is usually disposed between the positive electrode sheet and the negative electrode sheet. The parts of the positive electrode sheet and the negative electrode sheet with active materials constitute the electrode assembly 400, and the parts of the positive electrode sheet and the negative electrode sheet without active materials each constitute tabs. The positive electrode tab and the negative electrode tab may be located together at one end of the electrode assembly 400 or respectively at two ends of the electrode assembly 400. During the charging and discharging process of the battery 200, the positive electrode active material and the negative electrode active material react with the electrolyte, and the tabs are connected to the electrode terminals to form a current loop.

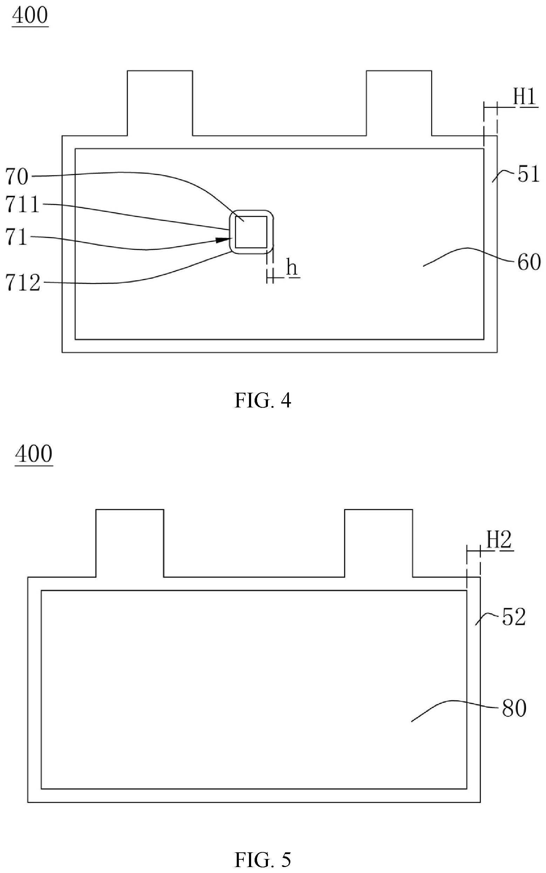

According to a first aspect, some embodiments of the present application provide an electrode assembly 400, referring to FIG. 4 and FIG. 5, where FIG. 4 is a schematic front view of an electrode assembly 400 provided in some embodiments of the present application, and FIG. 5 is a schematic rear view of an electrode assembly 400 provided in some embodiments of the present application.

In some embodiments of the present application, the electrode assembly 400 includes: an electrode assembly 400, a first covering member 60, and a second covering member 70; the first covering member 60 is disposed on a surface of the electrode assembly 400, and an information pattern is provided on the first covering member 60; and the second covering member 70 is disposed on a surface of the electrode assembly 400, and the information pattern is exposed outside the second covering member 70.

The electrode assembly 400 refers to a structure composed of a separator and electrode sheets; the first covering member 60 refers to a structure capable of covering part of the surface of the electrode assembly 400, and the first covering member 60 is provided with an information pattern to carry product information; and the second covering member 70 refers to a structure capable of covering the surface of the electrode assembly 400.

The information pattern is exposed outside the second covering member 70 means that the second covering member 70 does not shield or cover the information pattern, that is, the second covering member 70 is less likely to adversely affect the recognition of the information pattern, so as to facilitate the recognition devices in subsequent steps in recognizing the product information recorded in the information pattern.

In this embodiment, the second covering member 70 covers the surface of the electrode assembly 400 to protect the electrode assembly 400 through the second covering member 70 and reduce the impact of the external environment on the electrode assembly 400, and thus achieve the effect of protecting the electrode assembly 400. When the second covering member 70 covers the electrode assembly 400, the information pattern is enabled to be exposed outside the second covering member 70, thereby facilitating the recognition devices in recognizing the information recorded on the first covering member 60.

Referring to FIG. 4, in some embodiments, the second covering member 70 is spaced apart from the first covering member 60.

The second covering member 70 being spaced apart from the first covering member 60 means that the second covering member 70 and the first covering member 60 do not cover each other on the surface of the electrode assembly 400, to reduce the occurrence of the second covering member 70 covering the first covering member 60, thereby alleviating the possible adverse impacts of the second covering member 70 on the recognition of the first covering member 60 by recognition devices in various steps.

In this embodiment, the second covering member 70 is spaced apart from the first covering member 60 to reduce the impact of the second covering member 70 on the first covering member 60, such that the first covering member 60 can be better exposed to the external environment, thereby facilitating the recognition devices in recognizing the information recorded on the first covering member 60.

Referring to FIG. 4, in some embodiments, the second covering member 70 is provided with an avoidance hole 71, and the first covering member 60 is received in the avoidance hole 71.

The avoidance hole 71 refers to a through hole formed in the second covering member 70, and when the second covering member 70 is disposed on the surface of the electrode assembly 400, the first covering member 60 can be located in the avoidance hole 71.

In this embodiment, an avoidance hole 71 is provided in the second covering member 70, such that when the second covering member 70 is disposed on the surface of the electrode assembly 400, the first covering member 60 can be located in the avoidance hole 71. This enables the second covering member 70 to cover a larger area of the surface of the electrode assembly 400, reduces the area of the surface of the electrode assembly 400 exposed to the external environment, and thus improves the protection effect of the second covering member 70 on the electrode assembly 400.

Referring to FIG. 4, in some embodiments, the avoidance hole 71 includes at least two avoidance sidewalls 711, and two adjacent avoidance sidewalls 711 are connected by a rounded corner 712.

The avoidance sidewall 711 refers to the sidewall of the avoidance hole 71, and multiple avoidance sidewalls 711 can enclose the avoidance hole 71. Two adjacent avoidance sidewalls 711 are connected by a rounded corner 712, that is, a rounded corner 712 is provided at the junction of two adjacent avoidance sidewalls 711. Compared with two adjacent avoidance sidewalls 711 being directly connected to form an edge, the provision of the rounded corner 712 can reduce the stress concentration.

Since the second covering member 70 generally needs to be tensioned after being disposed on the surface of the electrode assembly 400 to reduce wrinkling, in this embodiment, two adjacent avoidance sidewalls 711 of the avoidance hole 71 are connected by a rounded corner 712. Compared with two avoidance sidewalls 711 being directly connected to form a sharp corner, the provision of the rounded corner 712 can reduce stress concentration at the junction of the two avoidance sidewalls 711, thereby reducing the risk of the second covering member 70 being torn during the tensioning process.

Referring to FIG. 4, in some embodiments, a distance between a sidewall of the first covering member 60 and an adjacent avoidance sidewall 711 is greater than zero.

The sidewall of the first covering member 60 refers to each wall surface on the periphery of the first covering member 60. When the first covering member 60 is received in the avoidance hole 71, the distance between the sidewall of the first covering member 60 and the avoidance sidewall 711 is greater than zero, that is, the area of the avoidance hole 71 is greater than the area of the first covering member 60. The distance between the sidewall of the first covering member 60 and the avoidance sidewall 711 can lower the precision requirement for equipment in this step, thereby reducing the processing difficulty and also improving the yield of the product.

In this embodiment, the distance between the sidewall of the first covering member 60 and the adjacent avoidance sidewall 711 is greater than zero, so as to facilitate the reception of the first covering member 60 in the avoidance hole 71, and reduce the difficulty of the first covering member 60 being received in the avoidance hole 71 when the second covering member 70 is disposed on the surface of the electrode assembly 400. Meanwhile, such arrangement can reduce the risk of the first covering member 60 being shielded by the second covering member 70, and provide a margin of error for the process of disposing the second covering member 70 on the surface of the electrode assembly 400 in the processing steps.

Referring to FIG. 4, in some embodiments, a distance between the sidewall of the first covering member 60 and the adjacent one of the avoidance sidewalls 711 is less than or equal to 1 mm, specifically, the distance may be 1 mm, 0.8 mm, 0.6 mm, 0.4 mm, 0.2 mm, 0.1 mm, or other values.

The distance between the sidewall of the first covering member 60 and the adjacent avoidance sidewall 711 is the distance shown as h in the figure. A larger distance between the sidewall of the first covering member 60 and the adjacent avoidance sidewall 711 indicates a lower precision requirement for equipment in step S902, but a larger area of the surface of the electrode assembly 400 exposed to the external environment, that is, a worse protection effect of the second covering member 70 on the electrode assembly 400; and a smaller distance indicates a higher precision requirement for equipment in step S902, and a better protection effect of the second covering member 70 on the electrode assembly 400.

Setting the distance between the sidewall of the first covering member 60 and the adjacent avoidance sidewall 711 to be less than or equal to 1 mm can not only relatively easily meet the equipment precision in step S902, but also enable the second covering member 70 to have a better protection effect on the electrode assembly 400.

This embodiment provides a range of distances between the sidewall of the first covering member 60 and the avoidance sidewall 711 to reduce the difficulty of the first covering member 60 being received in the avoidance hole 71 when the second covering member 70 is disposed on the surface of the electrode assembly 400, reduce the risk of the first covering member 60 being shielded by the second covering member 70, and also reduce the exposed area of the surface of the electrode assembly 400 in the gap between the sidewall of the first covering member 60 and the avoidance sidewall 711, such that the second covering member 70 can better perform the function of protecting the electrode assembly 400.

Referring to FIG. 4, in some embodiments, the surface of the electrode assembly 400 includes two oppositely disposed first surfaces 51, and the first covering member 60 and the second covering member 70 are disposed on the same first surface 51; or the surface of the electrode assembly 400 includes a first surface 51 surrounding the electrode assembly 400.

When the surface of the electrode assembly 400 includes two oppositely disposed first surfaces 51, that is, the electrode assembly 400 has multiple different surfaces, the electrode assembly 400 may be formed by a lamination process or a winding process. The second covering member 70 and the first covering member 60 are disposed on the same first surface 51, that is, the second covering member 70 is only disposed on a certain first surface 51 and will not cover other surfaces of the electrode assembly 400, that is, other surfaces not covered by the second covering member 70 exist on the side of the electrode assembly 400.

When the surface of the electrode assembly 400 includes a first surface 51 surrounding the electrode assembly 400, that is, the electrode assembly 400 includes a continuous first surface 51 surrounding the electrode assembly 400, in which case the electrode assembly 400 may be formed by a winding process.

In the technical solution of these embodiments, the surface of the electrode assembly 400 may include two oppositely disposed first surfaces 51, in which case the electrode assembly 400 may be formed by a lamination process or a winding process, and the second covering member 70 can protect a certain first surface 51 of the electrode assembly 400; or the surface of the electrode assembly 400 may alternatively include a first surface 51 surrounding the electrode assembly 400, in which case the electrode assembly 400 is formed by winding. To be specific, the adhesive tape application method for an electrode assembly may be applied to various types of electrode assemblies 400, which improves the compatibility of the adhesive tape application method for an electrode assembly.

Referring to FIG. 4, in some embodiments, a distance between any edge of a projection of the second covering member 70 on the first surface 51 and an edge of an adjacent one of the first surfaces 51 is greater than zero.

The distance between any edge of the projection of the second covering member 70 on the first surface 51 and an edge of an adjacent first surface 51 is the distance shown as H1 in the figure, and this configuration means that no part of the projection of the second covering member 70 on the first surface 51 is likely to extend beyond the first surface 51.

Since the second covering member 70 is prone to adhering to dust, metal debris or other external impurities if it extends beyond the first surface 51, and the external impurities adhered to the second covering member 70 may adversely affect the electrode assembly 400, in this embodiment, the distance between the edge of the projection of the second covering member 70 on the first surface 51 and the edge of the adjacent first surface 51 is set to be greater than zero, that is, a gap is formed between any side of the second covering member 70 and the adjacent edge of the first surface 51, such that no side of the second covering member 70 is likely to extend beyond the first surface 51, thereby reducing the risk of the second covering member 70 adhering to debris.

Referring to FIG. 4, in some embodiments, the distance between the edge of the projection of the second covering member 70 on the first surface 51 and the edge of the adjacent one of the first surfaces 51 is less than or equal to 3 mm, specifically, the distance may be 3 mm, 2.5 mm, 2 mm, 1.5 mm, 1 mm, 0.5 mm, or other values.

The distance between any edge of the projection of the second covering member 70 on the first surface 51 and an edge of an adjacent first surface 51 is the distance shown as H1 in the figure. A larger distance between any edge of the projection of the second covering member 70 on the first surface 51 and an edge of an adjacent first surface 51 indicates a lower precision requirement for equipment in step S904, but a larger area of the first surface 51 exposed to the external environment, that is, a worse protection effect of the second covering member 70 on the electrode assembly 400; and a smaller distance indicates a higher precision requirement for equipment in step S904, and a better protection effect of the second covering member 70 on the electrode assembly 400.

Setting the distance between any edge of the projection of the second covering member 70 on the first surface 51 and an edge of an adjacent first surface 51 to be less than or equal to 3 mm can not only relatively easily meet the equipment precision in step S902, but also enable the second covering member 70 to have a better protection effect on the electrode assembly 400.

This embodiment provides a range of distances between the edge of the projection of the second covering member 70 on the first surface 51 and the adjacent edge of the first surface 51, such that the second covering member 70 is less likely to extend beyond the first surface 51, while allowing the second covering member 70 to cover a larger area of the first surface 51, thereby better performing the function of protecting the electrode assembly 400.

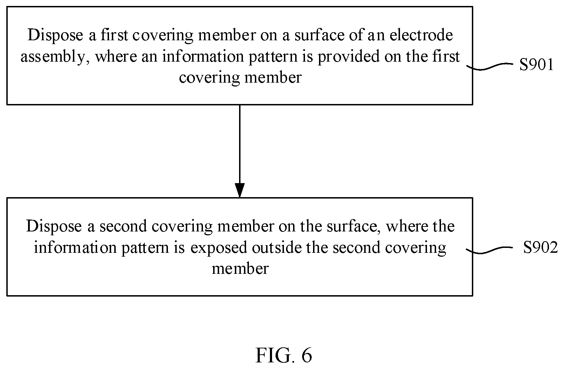

According to a second aspect, some embodiments of the present application further provide an adhesive tape application method for an electrode assembly, referring to FIG. 4 to FIG. 6, where FIG. 4 is a schematic front view of an electrode assembly 400 provided in some embodiments of the present application, FIG. 5 is a schematic rear view of an electrode assembly 400 provided in some embodiments of the present application, and FIG. 6 is a schematic flowchart of an adhesive tape application method for an electrode assembly provided in some embodiments of the present application.

In some embodiments of the present application, the adhesive tape application method for an electrode assembly includes the following steps.

S901: Dispose a first covering member 60 on a surface of the electrode assembly 400, where an information pattern is provided on the first covering member 60.

Similar to some embodiments of the first aspect, the electrode assembly 400 refers to a structure composed of a separator and electrode sheets, and the electrode assembly 400 is used for electrochemical reactions. The electrode assembly 400 may be formed by a lamination process of a separator, a positive electrode sheet, and a negative electrode sheet, or by a winding process of a separator, a positive electrode sheet, and a negative electrode sheet. Accordingly, the surface of the electrode assembly 400 may include multiple different surfaces or a surface surrounding the electrode assembly 400.

The first covering member 60 refers to a structure capable of covering part of the surface of the electrode assembly 400; the first covering member 60 is provided with an information pattern to carry product information, and the information pattern may be text, barcode, quick response code, or other patterns; the first covering member 60 may be made of paper, plastic, or other materials; the first covering member 60 may be circular, square, or in other shapes; and the first covering member 60 may be attached to the surface of the electrode assembly 400 or disposed on the surface of the electrode assembly 400 in other methods.

Since the main function of the first covering member 60 is to record product information, the area of the first covering member 60 does not need to excessively large, that is, the first covering member 60 may only cover part of the surface of the electrode assembly 400.

S902: Dispose a second covering member 70 on the surface, where the information pattern is exposed outside the second covering member 70.

The second covering member 70 refers to a structure capable of covering the surface of the electrode assembly 400, and the second covering member 70 is configured to protect the corresponding surface of the electrode assembly 400; the second covering member 70 may be made of paper, plastic, or other materials; the second covering member 70 may be circular, square, or in other shapes; and the second covering member 70 may be attached to the surface of the electrode assembly 400 or disposed on the surface of the electrode assembly 400 in other methods.

The second covering member 70 can cover only part of the surface of the electrode assembly 400 or the entire surface of the electrode assembly 400, and the second covering member 70 can play the role of protecting the electrode assembly 400 to reduce the impact of the external environment on the electrode assembly 400.

The information pattern being exposed outside the second covering member 70 means that the second covering member 70 does not shield or cover the information pattern, that is, the second covering member 70 is less likely to adversely affect the recognition of the information pattern, so as to facilitate the recognition devices in subsequent steps in recognizing the product information recorded in the information pattern.

For the specific manner in which the information pattern is exposed outside the second covering member 70, in some embodiments, the second covering member 70 may be spaced apart from the first covering member 60 such that the second covering member 70 and the first covering member 60 do not cover each other; in some other embodiments, since the information pattern usually does not cover the entire first covering member 60, covering the edge of the first covering member 60 with the second covering member 70 may also expose the information pattern to the outside. It can be understood that exposing the information pattern outside the second covering member 70 can also be achieved in other methods, for example, by changing the shape of the first covering member 60 or changing the shape of the second covering member 70, and is not limited to the above two methods.

In this embodiment, the information pattern is provided on the first covering member 60 to facilitate a recognition device in recognizing the information recorded in the information pattern, and the first covering member 60 is first disposed on the surface of the electrode assembly 400 to meet the processing step requirements, such that the recognition devices in subsequent steps can more easily obtain product information. The second covering member 70 covers the surface of the electrode assembly 400 to protect the electrode assembly 400 through the second covering member 70 and reduce the impact of the external environment on the electrode assembly 400, and thus achieve the effect of protecting the electrode assembly 400. When the second covering member 70 covers the electrode assembly 400, the information pattern is enabled to be exposed outside the second covering member 70, thereby facilitating the recognition devices in recognizing the information recorded on the first covering member 60.

In some embodiments, in the step of disposing a second covering member 70 on the surface, that is, in step S902, the second covering member 70 is spaced apart from the first covering member 60.

Similar to some embodiments of the first aspect, the second covering member 70 being spaced apart from the first covering member 60 means that the second covering member 70 and the first covering member 60 do not cover each other on the surface of the electrode assembly 400, to reduce the occurrence of the second covering member 70 covering the first covering member 60, thereby alleviating the possible adverse impacts of the second covering member 70 on the recognition of the first covering member 60 by recognition devices in various steps.

On the premise that the second covering member 70 is spaced apart from the first covering member 60, the second covering member 70 should cover as large an area of the first surface 51 as possible to protect a larger area of the electrode assembly 400. Accordingly, spacing the second covering member 70 apart from the first covering member 60 can be achieved in multiple ways. In some embodiments, the first covering member 60 may be disposed on the edge of the first surface 51, in which case the second covering member 70 may cover a larger area of the first surface 51 to better protect the electrode assembly 400. In some other embodiments, a window may also be provided on the second covering member 70, and when the second covering member 70 is disposed on the first surface 51, the window is opposite the first covering member 60, such that the second covering member 70 may be spaced apart from the first covering member 60 without covering each other, and the second covering member 70 can cover a larger area of the first surface 51 to better protect the electrode assembly 400. It can be understood that spacing the second covering member 70 apart from the first covering member 60 can also be achieved in other methods, for example, by changing the shape of the first covering member 60 or changing the shape of the second covering member 70, and is not limited to the above two methods.

In this embodiment, the second covering member 70 is spaced apart from the first covering member 60 to reduce the impact of the second covering member 70 on the first covering member 60, such that the first covering member 60 can be better exposed to the external environment, thereby facilitating the recognition devices in recognizing the information recorded on the first covering member 60.

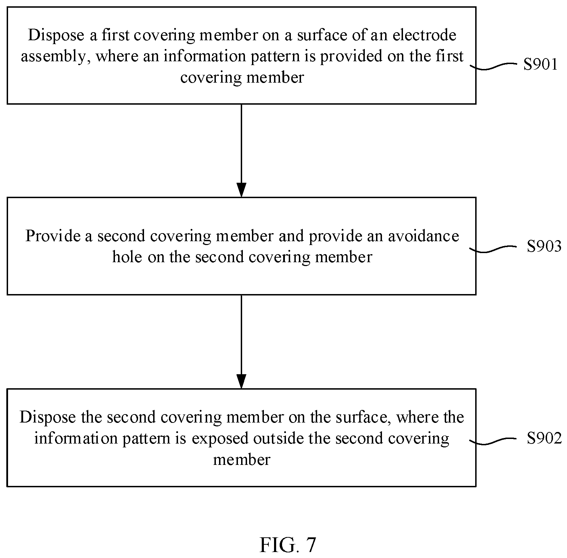

According to some embodiments of the present application, referring to FIG. 4, FIG. 5, and FIG. 7, where FIG. 4 is a schematic front view of an electrode assembly 400 provided in some embodiments of the present application, FIG. 5 is a schematic rear view of an electrode assembly 400 provided in some embodiments of the present application, and FIG. 7 is a schematic flowchart including a step of providing an avoidance hole 71 in an adhesive tape application method for an electrode assembly provided in some embodiments of the present application.

In some embodiments of the present application, before the step of disposing the second covering member 70 on the surface, that is, before step S902, the adhesive tape application method for an electrode assembly further includes the following step.

S903: Provide a second covering member 70 and provide an avoidance hole 71 on the second covering member 70.

Similar to some embodiments of the first aspect, the avoidance hole 71 refers to a through hole formed on the second covering member 70, and when the second covering member 70 is disposed on the surface of the electrode assembly 400, the first covering member 60 may be located in the avoidance hole 71. The avoidance hole 71 may be provided at any position on the second covering member 70, for example, the avoidance hole 71 may be provided at the edge, corner, center, or other positions of the second covering member 70, and the specific position of the avoidance hole 71 is determined according to the position of the first covering member 60. The avoidance hole 71 may be square, circular, or in other shapes, and the avoidance hole 71 may also be determined according to the shape of the first covering member 60. The avoidance hole 71 may be formed on the second covering member 70 by laser processing, stamping, or other methods.

Step S903 is mainly used to provide the avoidance hole 71 on the second covering member 70, so step S903 may be performed between S901 and S902 or prior to S901.

In step S902, the first covering member 60 is located in the avoidance hole 71, that is, in the process of disposing the second covering member 70 on the surface of the electrode assembly 400, the avoidance hole 71 is opposite the first covering member 60, such that after the second covering member 70 is disposed on the surface of the electrode assembly 400, the first covering member 60 can be received in the avoidance hole 71.

In this embodiment, an avoidance hole 71 is provided on the second covering member 70, such that when the second covering member 70 is disposed on the surface of the electrode assembly 400, the first covering member 60 can be received in the avoidance hole 71, and the second covering member 70 can cover a larger area of the surface of the electrode assembly 400 and reduce the area of the surface of the electrode assembly 400 exposed to the external environment, thereby improving the protection effect of the second covering member 70 on the electrode assembly 400.

Referring to FIG. 4, in some embodiments, the avoidance hole 71 includes at least two avoidance sidewalls 711, and two adjacent avoidance sidewalls 711 are connected by a rounded corner 712.

Similar to some embodiments of the first aspect, the avoidance sidewall 711 refers to the sidewall of the avoidance hole 71, and multiple avoidance sidewalls 711 can enclose the avoidance hole 71.

According to the shape of the avoidance hole 71, there are at least two avoidance sidewalls 711. For example, when the avoidance hole 71 is square, there are four avoidance sidewalls 711; for another example, when the avoidance hole 71 is triangular, there are three avoidance sidewalls 711; for another example, when the avoidance hole 71 is elliptical, there are two avoidance sidewalls 711.

Adjacent two avoidance sidewalls 711 are connected by a rounded corner 712, that is, a rounded corner 712 is provided at two adjacent avoidance sidewalls 711; compared with two adjacent avoidance sidewalls 711 being directly connected to form an edge, the provision of the rounded corner 712 can reduce the stress concentration.

Since the second covering member 70 generally needs to be tensioned after being disposed on the surface of the electrode assembly 400 to reduce wrinkling, the provision of the rounded corner 712 of the avoidance hole 71 can reduce the concentration of stress at the intersection of two adjacent avoidance sidewalls 711, thereby reducing the risk of tearing.

Since the second covering member 70 generally needs to be tensioned after being disposed on the surface of the electrode assembly 400 to reduce wrinkling, in this embodiment, two adjacent avoidance sidewalls 711 of the avoidance hole 71 are connected by a rounded corner 712. Compared with two avoidance sidewalls 711 being directly connected to form a sharp corner, the provision of the rounded corner 712 can reduce stress concentration at the junction of the two avoidance sidewalls 711, thereby reducing the risk of the second covering member 70 being torn during the tensioning process.

Referring to FIG. 4, in some embodiments, a distance between a sidewall of the first covering member 60 and an adjacent avoidance sidewall 711 is greater than zero.

Similar to some embodiments of the first aspect, the sidewall of the first covering member 60 refers to each wall surface on the periphery of the first covering member 60. When the first covering member 60 is received in the avoidance hole 71, the distance between the sidewall of the first covering member 60 and the avoidance sidewall 711 is greater than zero, that is, the area of the avoidance hole 71 is greater than the area of the first covering member 60.

Since the avoidance hole 71 needs to opposite the first covering member 60 when the second covering member 70 is disposed on the surface of the electrode assembly 400, and the shielding of the first covering member 60 by the second covering member 70 is reduced after the second covering member 70 is disposed on the surface of the electrode assembly 400, there is a precision requirement for the corresponding equipment in step S902. The distance between the sidewall of the first covering member 60 and the avoidance sidewall 711 can lower the precision requirement for equipment in this step, thereby reducing the processing difficulty and also improving the yield of the product.

In this embodiment, the distance between the sidewall of the first covering member 60 and the adjacent avoidance sidewall 711 is greater than zero, so as to facilitate the reception of the first covering member 60 in the avoidance hole 71, reduce the difficulty of the first covering member 60 being received in the avoidance hole 71 when the second covering member 70 is disposed on the surface of the electrode assembly 400, and also reduce the risk of the first covering member 60 being shielded by the second covering member 70, providing a margin of error for the process of disposing the second covering member 70 on the surface of the electrode assembly 400 in the processing steps.

Referring to FIG. 4, in some embodiments, a distance between the sidewall of the first covering member 60 and the adjacent one of the avoidance sidewalls 711 is less than or equal to 1 mm, specifically, the distance may be 1 mm, 0.8 mm, 0.6 mm, 0.4 mm, 0.2 mm, 0.1 mm, or other values.

Similar to some embodiments of the first aspect, the distance between the sidewall of the first covering member 60 and the adjacent avoidance sidewall 711 is the distance shown as h in the figure. Theoretically, this distance may be 0. When the second covering member 70 covers the edge of the first covering member 60, this distance may alternatively be negative. Affected by the precision of the processing equipment, a distance of 0 tends to cause the second covering member 70 to shield part of the first covering member 60, thereby adversely affecting the recognition of the product information recorded on the first covering member 60 by recognition devices.

A larger distance between the sidewall of the first covering member 60 and the adjacent avoidance sidewall 711 indicates a lower precision requirement for equipment in step S902, but a larger area of the surface of the electrode assembly 400 exposed to the external environment, that is, a worse protection effect of the second covering member 70 on the electrode assembly 400; and a smaller distance indicates a higher precision requirement the equipment in step S902, and a better protection effect of the second covering member 70 on the electrode assembly 400.

Setting the distance between the sidewall of the first covering member 60 and the adjacent avoidance sidewall 711 to be less than or equal to 1 mm can not only relatively easily meet the equipment precision in step S902, but also enable the second covering member 70 to have a better protection effect on the electrode assembly 400.

These embodiments provide a range of distances between the sidewall of the first covering member 60 and the avoidance sidewall 711 to reduce the difficulty of the first covering member 60 being received in the avoidance hole 71 when the second covering member 70 is disposed on the surface of the electrode assembly 400, reduce the risk of the first covering member 60 being shielded by the second covering member 70, and also reduce the exposed area of the surface of the electrode assembly 400 in the gap between the sidewall of the first covering member 60 and the avoidance sidewall 711, such that the second covering member 70 can better perform the function of protecting the electrode assembly 400.

According to some embodiments of the present application, referring to FIG. 3, referring to FIG. 4 and FIG. 5, where FIG. 3 is a schematic exploded structural diagram of a battery cell 300 provided in some embodiments of the present application, FIG. 4 is a schematic front view of an electrode assembly 400 provided in some embodiments of the present application, and FIG. 5 is a schematic rear view of an electrode assembly 400 provided in some embodiments of the present application.

In some embodiments of the present application, the surface of the electrode assembly 400 includes two oppositely disposed first surfaces 51, and the first covering member 60 and the second covering member 70 are disposed on the same first surface 51; or the surface of the electrode assembly 400 includes a first surface 51 surrounding the electrode assembly 400.

Similar to some embodiments of the first aspect, when the surface of the electrode assembly 400 includes two oppositely disposed first surfaces 51, that is, the electrode assembly 400 has multiple different surfaces, the electrode assembly 400 may be formed by a lamination process or a winding process. The second covering member 70 and the first covering member 60 are disposed on the same first surface 51, that is, the second covering member 70 is only disposed on a certain first surface 51 and will not cover other surfaces of the electrode assembly 400, that is, other surfaces not covered by the second covering member 70 exist on the side of the electrode assembly 400e.

When the surface of the electrode assembly 400 includes a first surface 51 surrounding the electrode assembly 400, that is, the electrode assembly 400 includes a continuous first surface 51 surrounding the electrode assembly 400, in which case the electrode assembly 400 may be formed by a winding process. As the second covering member 70 is configured to cover the part of the first surface 51 not covered by the first covering member 60, the second covering member 70 can surround the electrode assembly 400 and cover most of the area of the first surface 51. Since the first surface 51 is a continuous surface surrounding the electrode assembly 400, the second covering member 70 can cover most of the area of the side surface of the electrode assembly 400.

In the technical solution of these embodiments, the surface of the electrode assembly 400 may include two oppositely disposed first surfaces 51, in which case the electrode assembly 400 may be formed by a lamination process or a winding process, and the second covering member 70 can protect a certain first surface 51 of the electrode assembly 400; or the surface of the electrode assembly 400 may alternatively include a first surface 51 surrounding the electrode assembly 400, in which case the electrode assembly 400 is formed by winding. To be specific, the adhesive tape application method for an electrode assembly may be applied to various types of electrode assemblies 400, which improves the compatibility of the adhesive tape application method for an electrode assembly.

Referring to FIG. 4 and FIG. 5, in some embodiments, in the step of disposing a second covering member 70 on the surface, that is, in step S902, a projection area of the second covering member 70 on the first surface 51 is smaller than an area of the first surface 51.

The projection area of the second covering member 70 on the first surface 51 is the area that the second covering member 70 can cover. Setting the projection area of the second covering member 70 on the first surface 51 to be smaller than the area of the first surface 51 means that the second covering member 70 cannot completely cover the first surface 51, and the second covering member 70 does not cover the edge of the first surface 51, such that the second covering member 70 is less likely to extend beyond the first surface 51.

It can be understood that the main function of the second covering member 70 is to protect the corresponding first surface 51. On the premise that it is less likely to extend beyond the first surface 51, the difference between the projection area of the second covering member 70 on the first surface 51 and the area of the first surface 51 should be small, such that the second covering member 70 can cover a larger area of the first surface 51, thereby better playing the role of protecting the first surface 51.

Since the second covering member 70 extending beyond the first surface 51 is prone to adhering to dust, metal debris or other external impurities, and the external impurities adhered to the second covering member 70 may adversely affect the electrode assembly 400, for example, metal debris adhered to the second covering member 70 may enter the electrode assembly 400 and cause a short circuit.

Accordingly, in this embodiment, the projection area of the second covering member 70 on the first surface 51 is made smaller than the projection area of the first surface 51, such that the second covering member 70 cannot completely cover the first surface 51, thus preventing the second covering member 70 from extending to the edge of the first surface 51 or even beyond the edge. Since the second covering member 70 that extends beyond the first surface 51 may adhere to external impurities and thus easily adversely affect the yield of the electrode assembly 400, this configuration can reduce the risk of the second covering member 70 adhering to debris.

Referring to FIG. 4, in some embodiments, a distance between any edge of a projection of the second covering member 70 on the first surface 51 and an edge of an adjacent one of the first surfaces 51 is greater than zero.

Similar to some embodiments of the first aspect, the distance between any edge of the projection of the second covering member 70 on the first surface 51 and the edge of the adjacent first surface 51 is the distance shown as H1 in the figure, and this configuration means that no part of the projection of the second covering member 70 on the first surface 51 is likely to extend beyond the first surface 51, that is, the projection of the second covering member 70 on the first surface 51 can completely fall on the first surface 51; and after the second covering member 70 is disposed on the first surface 51, no edge of the second covering member 70 is likely to extend beyond the first surface 51.

In this embodiment, the distance between the edge of the projection of the second covering member 70 on the first surface 51 and the edge of the adjacent first surface 51 is greater than zero, that is, a gap is provided between any side of the second covering member 70 and the adjacent edge of the first surface 51, such that no side of the second covering member 70 is likely to extend beyond the first surface 51, thereby reducing the risk of the second covering member 70 adhering to debris.

Referring to FIG. 4, in some embodiments, the distance between the edge of the projection of the second covering member 70 on the first surface 51 and the edge of the adjacent one of the first surfaces 51 is less than or equal to 3 mm, specifically, the distance may be 3 mm, 2.5 mm, 2 mm, 1.5 mm, 1 mm, 0.5 mm, or other values.

Similar to some embodiments of the first aspect, the distance between any edge of the projection of the second covering member 70 on the first surface 51 and the edge of the adjacent first surface 51 is the distance shown as H1 in the figure. Since the second covering member 70 is configured to protect the first surface 51, theoretically this distance may be 0, but affected by the precision of the processing equipment, a distance of 0 tends to cause the second covering member 70 to extend beyond the first surface 51, thereby easily adhering to impurities and easily adversely affecting the electrode assembly 400.

A larger distance between any edge of the projection of the second covering member 70 on the first surface 51 and an edge of an adjacent first surface 51 indicates a lower precision requirement for equipment in step S902, but a larger area of the first surface 51 exposed to the external environment, that is, a worse protection effect of the second covering member 70 on the electrode assembly 400; and a smaller distance indicates a higher precision requirement for equipment in step S902, and a better protection effect of the second covering member 70 on the electrode assembly 400.

Setting the distance between any edge of the projection of the second covering member 70 on the first surface 51 and an edge of an adjacent first surface 51 to be less than or equal to 3 mm can not only relatively easily meet the equipment precision in step S902, but also enable the second covering member 70 to have a better protection effect on the electrode assembly 400.

This embodiment provides a range of distances between the edge of the projection of the second covering member 70 on the first surface 51 and the adjacent edge of the first surface 51, such that the second covering member 70 is less likely to extend beyond the first surface 51, while allowing the second covering member 70 to cover a larger area of the first surface 51, thereby better performing the function of protecting the electrode assembly 400.

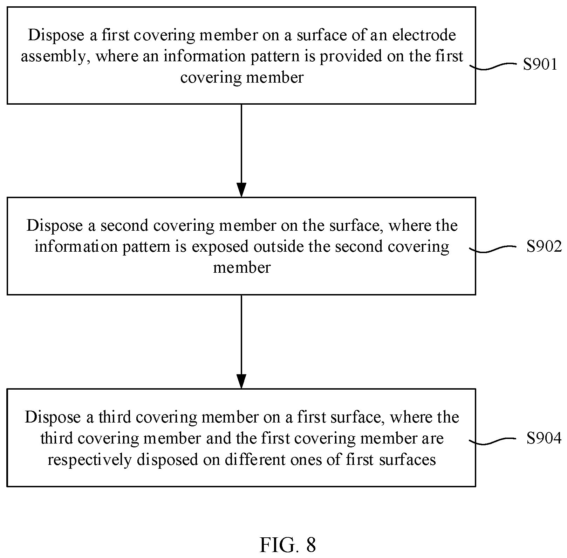

According to some embodiments of the present application, referring to FIG. 4, FIG. 5, and FIG. 8, where FIG. 4 is a schematic front view of an electrode assembly 400 provided in some embodiments of the present application, FIG. 5 is a schematic rear view of an electrode assembly 400 provided in some embodiments of the present application, and FIG. 8 is a schematic flowchart including a third covering member 80 in an adhesive tape application method for an electrode assembly provided in some embodiments of the present application.

In some embodiments of the present application, the surface of the electrode assembly 400 includes two oppositely disposed first surfaces 51, and the first covering member 60 is disposed on any one of the two first surfaces 51.

The adhesive tape application method for an electrode assembly further includes the following step.

S904: Dispose a third covering member 80 on the first surface 51, where the third covering member 80 and the first covering member 60 are respectively disposed on different ones of the first surfaces 51.

The third covering member 80 refers to a structure capable of covering the first surface 51, and the third covering member 80 is configured to protect the corresponding first surface 51. The third covering member 80 may be made of paper, plastic, or other materials; the third covering member 80 may be circular, square, or in other shapes. and the third covering member 80 may be attached to the first surface 51 or disposed on the first surface 51 in other methods.

The third covering member 80 may cover part of the first surface 51 or the entire first surface 51, and the third covering member 80 can perform the function of protecting the corresponding first surface 51 to reduce the impact of the external environment on the first surface 51.

The third covering member 80 and the first covering member 60 are located on different first surfaces 51. Since the first surface 51 where the first covering member 60 is located is provided with the second covering member 70 to protect the corresponding first surface 51, the third covering member 80 is disposed on the first surface 51 opposite the first covering member 60 to protect the first surface 51. Since the third covering member 80 and the first covering member 60 are disposed on different first surfaces 51, the third covering member 80 does not need to consider the shielding of the first covering member 60, and the third covering member 80 should cover a larger area of the corresponding first surface 51 to better play the protection effect.

In this embodiment, the third covering member 80 is provided and disposed on the first surface 51 opposite the first covering member 60, such that the third covering member 80 can protect the corresponding first surface 51. Since one first covering member 60 is required on the electrode assembly 400 for recognition devices to obtain information, the first surface 51 corresponding to the third covering member 80 need not be provided with the first covering member 60, and in this case, the third covering member 80 involves no issues of avoidance and information covering.

Referring to FIG. 5, in some embodiments, a distance between any edge of a projection of the third covering member 80 on the first surface 51 and an edge of an adjacent one of the first surfaces 51 is greater than zero.

The distance between any edge of the projection of the third covering member 80 on the first surface 51 and the edge of the adjacent first surface 51 is the distance shown as H2 in the figure, and this setting means that no part of the projection of the third covering member 80 on the first surface 51 is likely to extend beyond the first surface 51, that is, the projection of the third covering member 80 on the first surface 51 can completely fall on the first surface 51; and after the third covering member 80 is disposed on the first surface 51, no edge of the third covering member 80 is likely to extend beyond the first surface 51.

It can be understood that the main function of the third covering member 80 is to protect the corresponding first surface 51. On the premise that it is less likely to extend beyond the first surface 51, the distance between any edge of the projection of the third covering member 80 on the first surface 51 and an edge of an adjacent first surface 51 should be small, such that the third covering member 80 can cover a larger area of the first surface 51, thereby better playing the role of protecting the first surface 51.

Since the third covering member 80 extending beyond the first surface 51 is prone to adhering to dust, metal debris, or other external impurities, and the external impurities adhered to the third covering member 80 may adversely affect the electrode assembly 400, for example, metal debris adhered to the third covering member 80 may enter the electrode assembly 400 and cause a short circuit.

Accordingly, similar to the second covering member 70 in some embodiments, in this embodiment, the distance between the edge of the projection of the third covering member 80 on the first surface 51 and the edge of the adjacent first surface 51 is greater than zero, that is, a gap is provided between any side of the third covering member 80 and the adjacent edge of the first surface 51, such that no side of the third covering member 80 is likely to extend beyond the first surface 51, thereby reducing the risk of the third covering member 80 adhering to debris.

Referring to FIG. 5, in some embodiments, the distance between the edge of the projection of the third covering member 80 on the first surface 51 and the edge of the adjacent one of the first surfaces 51 is less than or equal to 3 mm, specifically, the distance may be 3 mm, 2.5 mm, 2 mm, 1.5 mm, 1 mm, 0.5 mm, or other values.

The distance between any edge of the projection of the third covering member 80 on the first surface 51 and an edge of an adjacent first surface 51 is the distance shown as H2 in the figure; since the third covering member 80 is configured to protect the first surface 51, theoretically this distance can be 0, but affected by the precision of the processing equipment, a distance of 0 tends to cause the third covering member 80 to extend beyond the first surface 51, thereby easily adhering to impurities and easily adversely affecting the electrode assembly 400.

A larger distance between any edge of the projection of the third covering member 80 on the first surface 51 and an edge of an adjacent first surface 51 indicates a lower precision requirement for equipment in step S904, but a larger area of the first surface 51 exposed to the external environment, that is, a worse protection effect of the third covering member 80 on the electrode assembly 400; and a smaller distance indicates a higher precision requirement for equipment in step S904, and a better protection effect of the third covering member 80 on the electrode assembly 400.

Setting the distance between any edge of the projection of the third covering member 80 on the first surface 51 and an edge of an adjacent first surface 51 to be less than or equal to 3 mm can not only relatively easily meet the equipment precision in step S902, but also enable the third covering member 80 to have a better protection effect on the electrode assembly 400.

This embodiment provides a range of distances between the edge of the projection of the third covering member 80 on the first surface 51 and the adjacent edge of the first surface 51, such that the third covering member 80 is less likely to extend beyond the first surface 51, while allowing the third covering member 80 to cover a larger area of the first surface 51, thereby better performing the function of protecting the electrode assembly 400.

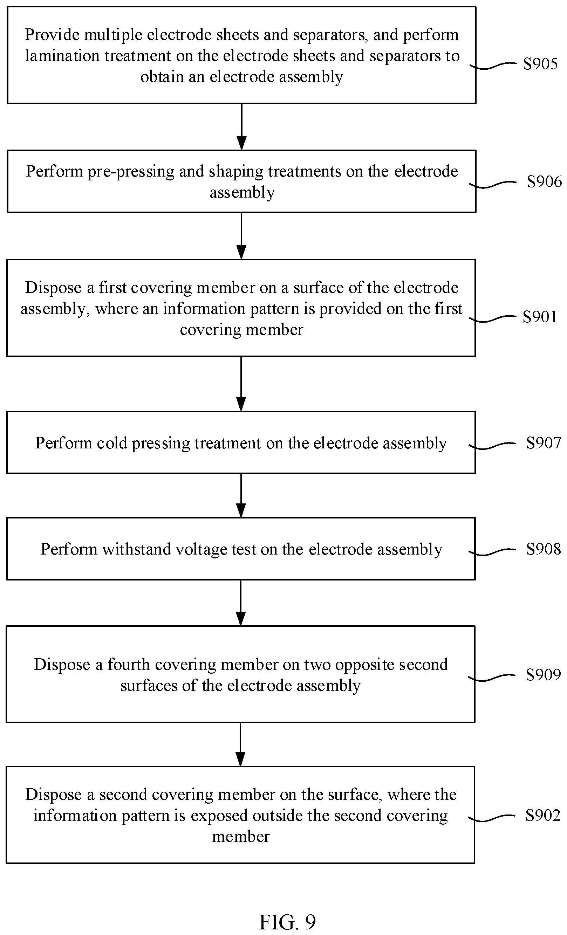

According to some embodiments of the present application, referring to FIG. 9, FIG. 9 is a schematic flowchart of an adhesive tape application method for an electrode assembly provided in some embodiments of the present application.

In some embodiments of the present application, before step S901, the adhesive tape application method for an electrode assembly further includes the following step.

S906: Perform pre-pressing and shaping treatments on the electrode assembly 400.

During manufacture of the electrode assembly 400, the electrode assembly 400 is generally formed by stacking and laminating layers in sequence of positive electrode sheet, separator, negative electrode sheet, and separator. If the internal gaps of the electrode assembly 400 are large and the overall electrode assembly 400 is relatively fluffy, the separator and the electrode sheets tend to be bonded loosely, which may easily cause wrinkling in the separator and looseness in the electrode assembly 400, thereby easily increasing the resistance in the process of lithium ions being embedded in the negative electrode after being de-embedded from the positive electrode, and thus easily causing lithium precipitation. After long-term cycling, lithium dendrites are formed and penetrate the coated separator, causing internal short circuit in the electrode assembly 400 and resulting in safety hazards.

In order to reduce internal voids of the electrode assembly 400 and reduce the fluffiness of the electrode assembly 400, it is necessary to perform pre-pressing and shaping on the electrode assembly 400 after the positive electrode sheet, the separator, and the negative electrode sheet are stacked and laminated to form the electrode assembly 400, so as to reduce the gaps inside the electrode assembly 400, make the bonding between the separator and the electrode sheets tighter, and enable the electrode assembly 400 to form the required shape.

At the same time, compared with the fluffy electrode assembly 400, the first covering member 60 is easier to be disposed on the electrode assembly 400 after pre-pressing and shaping, and setting step S906 before step S901 can also reduce the possible adverse impacts of the first covering member 60 on pre-pressing and shaping.

In this embodiment, before the step of providing the electrode assembly 400 having two oppositely disposed first surfaces 51, a step of performing pre-pressing and shaping treatments on the electrode assembly 400 is further provided, so as to facilitate the attachment of the first covering member 60 to the electrode assembly 400.

Referring to FIG. 9, in some embodiments, before S906, the adhesive tape application method for an electrode assembly further includes the following step.

S905: Provide multiple electrode sheets and separators, and perform lamination treatment on the electrode sheets and separators to obtain the electrode assembly 400.

The electrode sheets include positive electrode sheets and negative electrode sheets, where the positive electrode sheets and negative electrode sheets are stacked, and a separator is provided between adjacent positive electrode sheet and negative electrode sheet, and then lamination treatment is performed on the stacked positive electrode sheets, negative electrode sheets and separators, so as to obtain the electrode assembly 400.

The lamination treatment refers to a formation method of the electrode assembly 400, which corresponds to the winding treatment. In some embodiments, the lamination treatment may be as follows: separators are arranged on both sides of the negative electrode sheet, and the negative electrode sheet and separator are bent in an S-shape, where there are multiple stacked flat portions in the bent negative electrode sheet, and then the positive electrode sheet is cut and the cut positive electrode sheet is arranged between two opposite flat portions of the bent negative electrode sheet. In some other embodiments, the positive electrode sheet and negative electrode sheet may alternatively be cut, and the positive electrode sheet and negative electrode sheet are alternately stacked, and then a separator is provided between adjacent positive electrode sheets and negative electrode sheets. It can be understood that the lamination treatment can also be achieved in other methods, and is not limited to the above two methods.

This embodiment makes the electrode assembly 400 formed by the lamination process. Since the lamination process requires more protection of the electrode assembly 400 by the second covering member 70, limiting the electrode assembly 400 to be formed by the lamination process enables the adhesive tape application method for an electrode assembly to both protect the electrode assembly 400 and facilitate the recognition devices in obtaining information.

Referring to FIG. 9, in some embodiments, the adhesive tape application method for an electrode assembly further includes the following step.

S909: Dispose a fourth covering member on two opposite second surfaces 52 of the electrode assembly 400, where an area of the second surface 52 is smaller than an area of the first surface 51, and the second surface 52 is adjacent to the first surface 51.

The second surface 52 refers to a surface on the electrode assembly 400 adjacent to the first surface 51, and the electrode assembly 400 has two second surfaces 52 that are oppositely disposed.

The area of the second surface 52 is smaller than the area of the first surface 51, that is, the first surface 51 is the surface of the electrode assembly 400 with a larger area, and the first covering member 60 is disposed on the surface of the electrode assembly 400 with a larger area, so as to facilitate the recognition devices in various steps in obtaining the product information recorded on the first covering member 60. Meanwhile, as the first covering member 60 is usually oriented upward to facilitate recognition and obtaining information, disposing the first covering member 60 on the surface of the electrode assembly 400 with a larger area can also make the other first surface 51 opposite the first covering member 60 contact the conveying device. Due to the larger area of the first surface 51, this arrangement can make the electrode assembly 400 more stable during the conveying process and less prone to displacement, tipping or overturning.

The fourth covering member refers to a structure capable of covering the second surface 52, and the fourth covering member is configured to protect the corresponding second surface 52; the fourth covering member may be made of paper, plastic, or other materials; the fourth covering member may be circular, square, or in other shapes; and the fourth covering member may be attached to the second surface 52 or disposed on the second surface 52 in other methods.

The fourth covering member can cover part of the second surface 52 or the entire second surface 52, and the fourth covering member can play the role of protecting the corresponding second surface 52 to reduce the impact of the external environment on the second surface 52.

Step S909 is used to dispose the fourth covering member on two opposite second surfaces 52, and this step can be provided before step S902 or after step S902, that is, the present application does not specifically limit the setting order of the second covering member 70 and the fourth covering member.

In this embodiment, a fourth covering member is provided to protect the two opposite second surfaces 52 of the electrode assembly 400, so as to work in conjunction with the second covering member 70 to better protect the electrode assembly 400; meanwhile, the area of the second surface 52 is smaller than the area of the first surface 51, to be specific, the first covering member 60 is disposed on the surface of the electrode assembly 400 with a larger area, so as to reduce the difficulty of fixing the first covering member 60 and also facilitate a recognition device in recognizing the information recorded on the first covering member 60.

Referring to FIG. 9, in some embodiments, before step S902, the adhesive tape application method for an electrode assembly further includes:
S907: Perform cold pressing treatment on the electrode assembly 400.

The cold pressing treatment refers to a processing process of compressing the electrode assembly 400, which can make the electrode assembly 400 pass through two opposed pressure rollers to achieve cold pressing treatment, or achieve cold pressing treatment on the electrode assembly 400 in other methods. The main function of the cold pressing treatment is to increase the compaction density of the positive and negative electrode materials, thereby increasing the discharge capacity of the battery cell 300, reducing internal resistance, reducing polarization loss, and prolonging the cycle life of the battery 200.

Meanwhile, the electrode assembly 400 that has been compacted after cold pressing treatment can also facilitate better fixing of the second covering member 70 on the electrode assembly 400.

In this embodiment, cold pressing treatment is performed on the electrode assembly 400 after the first covering member 60 is fixed, to reduce the voids inside the electrode assembly 400 and facilitate subsequent fixing of the second covering member 70 on the electrode assembly 400.

Referring to FIG. 9, in some embodiments, before step S902, the adhesive tape application method for an electrode assembly further includes the following step.

S908: Perform withstand voltage test on the electrode assembly 400.

The withstand voltage test refers to a test used to detect the internal circuit condition of the electrode assembly 400, for example, the withstand voltage test can detect the short circuit condition of the electrode assembly 400.

Since the electrode assembly 400 usually needs to be subjected to shaping, cold pressing and other treatments after the electrode assembly 400 is wound or laminated, and foreign objects may enter the electrode assembly 400 in various steps, performing withstand voltage test on the electrode assembly 400 after treatments such as shaping and cold pressing can check the internal circuit condition of the electrode assembly 400, thereby determining the yield of the electrode assembly 400. If the electrode assembly 400 is defective, it can be timely unloaded or further processed, thereby reducing the impact on subsequent processes and improving production efficiency.

The withstand voltage test may determine whether there are foreign particles inside the electrode assembly 400 causing short circuit, and may also determine the distance between the positive electrode sheet and the negative electrode sheet. Specifically, a certain voltage may be applied between the positive and negative electrodes of the electrode assembly 400, and the resistance between the positive and negative electrodes is obtained through the leakage current between the positive and negative electrodes, and whether the electrode assembly 400 is short-circuited is determined by the magnitude of the resistance.

In this embodiment, withstand voltage test is performed on the electrode assembly 400 after the first covering member 60 is fixed, to determine the yield of the electrode assembly 400, facilitating timely processing of defective electrode assemblies 400, thereby achieving the effect of improving processing efficiency.

According to a third aspect, some embodiments of the present application further provide a battery cell 300, including the electrode assembly 400 formed by the adhesive tape application method for an battery 200 assembly provided in some embodiments of the first aspect, or including the electrode assembly 400 provided in some embodiments of the second aspect.

Referring to FIG. 3, the battery cell 300 includes an end cap 42, a casing 41, an electrode assembly 400, and other functional components.

The end cap 42 refers to a component that covers the opening of the casing 41 to isolate the internal environment of the battery cell 300 from the external environment. The casing 41 is a component used to cooperate with the end cap 42 to form the internal environment of the battery cell 300, where the formed internal environment may be used to accommodate the electrode assembly 400, electrolyte, and other components. In the battery cell 300, there may be one electrode assembly 400 or two or more.

According to a fourth aspect, some embodiments of the present application further provide a battery 200, including the electrode assembly 400 formed by the adhesive tape application method for a battery 200 assembly provided in some embodiments of the first aspect, or including the electrode assembly 400 provided in some embodiments of the second aspect; or including the battery cell 300 provided in some embodiments of the third aspect.

Referring to FIG. 2, the battery 200 includes a case 30 and a battery cell 300, and the battery cell 300 is accommodated in the case 30. The case 30 is configured to provide an accommodation space for the battery cell 300, and the case 30 may have multiple structures, for example, the case 30 may be cylindrical, rectangular parallelepiped, or in other shapes.

In the battery 200, the battery cell 300 may be a prismatic battery cell 300 or a cylindrical battery cell 300; there may be multiple battery cells 300, and multiple battery cells 300 may be connected in series, in parallel, or in a series-parallel.

According to a fifth aspect, some embodiments of the present application further provide an electric device 100, including the electrode assembly 400 formed by the adhesive tape application method for a battery 200 assembly provided in some embodiments of the first aspect, or including the electrode assembly 400 provided in some embodiments of the second aspect; or including the battery cell 300 provided in some embodiments of the third aspect, or the battery 200 provided in some embodiments of the fourth aspect.

The electric device 100 may be, but is not limited to, mobile phones, tablets, notebook computers, electric toys, electric tools, electric bicycles, electric vehicles, ships, and spacecraft. The electric toys may include fixed or mobile electric toys, such as game consoles, electric vehicle toys, electric ship toys, and electric aircraft toys, and the spacecraft may include airplanes, rockets, space shuttles, spaceships, and the like.

Finally, it should be noted that: the above embodiments are only used to illustrate the technical solutions of the present application, and not to limit them; although the present application has been described in detail with reference to the foregoing embodiments, those of ordinary skill in the art should understand that: the technical solutions recorded in the foregoing embodiments can still be modified, or some or all of the technical features can be equivalently replaced; these modifications or replacements do not make the essence of the corresponding technical solutions depart from the scope of the technical solutions of the embodiments of the present application, and they should all be covered in the claims and the scope of the specification of the present application. In particular, as long as there is no structural conflict, the various technical features mentioned in the various embodiments can be combined in any manner. The present application is not limited to the specific embodiments disclosed in the text, but includes all technical solutions falling within the scope of the claims.

## Claims

1. An electrode assembly, **characterized by** comprising:
a first covering member disposed on a surface of the electrode assembly, wherein an information pattern is provided on the first covering member; and
a second covering member disposed on the surface of the electrode assembly, wherein the information pattern is exposed outside the second covering member.

2. The electrode assembly according to claim 1, **characterized in that** the second covering member is spaced apart from the first covering member.

3. The electrode assembly according to claim 2, **characterized in that** the second covering member is provided with an avoidance hole, and the first covering member is received in the avoidance hole.

4. The electrode assembly according to claim 3, **characterized in that** the avoidance hole comprises at least two avoidance sidewalls, and two adjacent of the avoidance sidewalls are connected by a rounded corner.

5. The electrode assembly according to claim 3 or 4, **characterized in that** a distance between a sidewall of the first covering member and an adjacent one of the avoidance sidewalls is greater than zero.

6. The electrode assembly according to claim 5, **characterized in that** the distance between the sidewall of the first covering member and the adjacent one of the avoidance sidewalls is less than or equal to 1 mm.

7. The electrode assembly according to any one of claims 1 to 6, **characterized in that** the electrode assembly comprises two oppositely disposed first surfaces, and the first covering member and the second covering member are disposed on the same one of the first surfaces; or
the surface comprises a first surface surrounding the electrode assembly.

8. The electrode assembly according to claim 7, **characterized in that** a distance between any edge of a projection of the second covering member on the first surface and an edge of an adjacent one of the first surfaces is greater than zero.

9. The electrode assembly according to claim 8, **characterized in that** the distance between the edge of the projection of the second covering member on the first surface and the edge of the adjacent one of the first surfaces is less than or equal to 3 mm.

10. An adhesive tape application method for an electrode assembly, **characterized by** comprising:
disposing a first covering member on a surface of the electrode assembly, wherein an information pattern is provided on the first covering member; and
disposing a second covering member on the surface, wherein the information pattern is exposed outside the second covering member.

11. The adhesive tape application method for an electrode assembly according to claim 10, **characterized in that** in the step of disposing a second covering member on the surface, the second covering member is spaced apart from the first covering member.

12. The adhesive tape application method for an electrode assembly according to claim 10 or 11, **characterized in that** before the step of disposing a second covering member on the surface, the adhesive tape application method for an electrode assembly further comprises:
providing the second covering member and providing an avoidance hole on the second covering member; wherein
in the step of disposing a second covering member on the surface, the first covering member is located in the avoidance hole.

13. The adhesive tape application method for an electrode assembly according to claim 12, **characterized in that** the avoidance hole comprises at least two avoidance sidewalls, and two adjacent of the avoidance sidewalls are connected by a rounded corner.

14. The adhesive tape application method for an electrode assembly according to claim 13, **characterized in that** a distance between a sidewall of the first covering member and an adjacent one of the avoidance sidewalls is greater than zero.

15. The adhesive tape application method for an electrode assembly according to claim 13 or 14, **characterized in that** a distance between the sidewall of the first covering member and the adjacent one of the avoidance sidewalls is less than or equal to 1 mm.

16. The adhesive tape application method for an electrode assembly according to any one of claims 10 to 15, **characterized in that** the surface comprises two oppositely disposed first surfaces, and the first covering member and the second covering member are disposed on the same one of the first surfaces; or
the surface comprises a first surface surrounding the electrode assembly.

17. The adhesive tape application method for an electrode assembly according to claim 16, **characterized in that** in the step of disposing a second covering member on the surface, a projection area of the second covering member on the first surface is smaller than an area of the first surface.

18. The adhesive tape application method for an electrode assembly according to claim 17, **characterized in that** a distance between any edge of a projection of the second covering member on the first surface and an edge of an adjacent one of the first surfaces is greater than zero.

19. The adhesive tape application method for an electrode assembly according to claim 17 or 18, **characterized in that** the distance between the edge of the projection of the second covering member on the first surface and the edge of the adjacent one of the first surfaces is less than or equal to 3 mm.

20. The adhesive tape application method for an electrode assembly according to any one of claims 10 to 19, **characterized in that** the surface comprises two oppositely disposed first surfaces, and the first covering member is disposed on any one of the two first surfaces; and
the adhesive tape application method for an electrode assembly further comprises:
disposing a third covering member on the first surface, wherein the third covering member and the first covering member are respectively disposed on different ones of the first surfaces.

21. The adhesive tape application method for an electrode assembly according to claim 20, **characterized in that** a distance between any edge of a projection of the third covering member on the first surface and an edge of an adjacent one of the first surfaces is greater than zero.

22. The adhesive tape application method for an electrode assembly according to claim 20 or 21, **characterized in that** the distance between the edge of the projection of the third covering member on the first surface and the edge of the adjacent one of the first surfaces is less than or equal to 3 mm.

23. The adhesive tape application method for an electrode assembly according to any one of claims 20 to 22, **characterized in that** before the step of disposing a first covering member on a surface of the electrode assembly, the adhesive tape application method for an electrode assembly further comprises:
performing pre-pressing and shaping treatments on the electrode assembly.

24. The adhesive tape application method for an electrode assembly according to any one of claims 20-23, **characterized in that** the adhesive tape application method for an electrode assembly further comprises:
disposing a fourth covering member on two opposite second surfaces of the electrode assembly, wherein an area of the second surface is smaller than an area of the first surface, and the second surface is adjacent to the first surface.

25. A battery cell, **characterized by** comprising: the electrode assembly according to any one of claims 1 to 9; or the electrode assembly formed by the adhesive tape application method for an electrode assembly according to any one of claims 10 to 24.

26. A battery, **characterized by** comprising the battery cell according to claim 25.

27. An electric device, **characterized by** comprising the battery according to claim 26.
